(19) Europäisches Patentamt
European Patent Office
Office européen des brevets

(11) **EP 3 812 130 B1**

(12) **EUROPEAN PATENT SPECIFICATION**

(45) Date of publication and mention
of the grant of the patent:
**22.02.2023 Bulletin 2023/08**

(21) Application number: **19814940.3**

(22) Date of filing: **25.04.2019**

(51) International Patent Classification (IPC):
**B29C 64/118** (2017.01)    **B29C 64/259** (2017.01)
**B33Y 70/00** (2015.01)    **B33Y 80/00** (2015.01)
**D01F 1/10** (2006.01)    **D01F 8/12** (2006.01)

(52) Cooperative Patent Classification (CPC):
(C-Sets available)
**D01F 8/12; B29C 64/118; B29C 64/259;**
**B32B 7/027; B32B 7/12; B32B 25/08; B32B 27/08;**
**B32B 27/20; B32B 27/22; B32B 27/283;**
**B32B 27/302; B32B 27/304; B32B 27/308;**
**B32B 27/32; B32B 27/34;**    (Cont.)

(86) International application number:
**PCT/JP2019/017813**

(87) International publication number:
**WO 2019/235104 (12.12.2019 Gazette 2019/50)**

(54) **3D PRINTER MATERIAL**

MATERIAL FÜR 3D-DRUCKER

MATÉRIAU POUR IMPRIMANTE 3D

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.06.2018 JP 2018108487**

(43) Date of publication of application:
**28.04.2021 Bulletin 2021/17**

(73) Proprietor: **Mitsubishi Chemical Corporation**
**Chiyoda-ku**
**Tokyo 100-8251 (JP)**

(72) Inventors:
• **HIRANO Akiko**
**Tokyo 100-8251 (JP)**
• **TANIGUCHI Kouichirou**
**Tokyo 100-8251 (JP)**

(74) Representative: **Vossius & Partner**
**Patentanwälte Rechtsanwälte mbB**
**Siebertstrasse 3**
**81675 München (DE)**

(56) References cited:
WO-A1-2017/112689    JP-A- 2016 505 409
JP-A- 2017 502 852    US-A1- 2012 070 619

(52) Cooperative Patent Classification (CPC): (Cont.)
**B32B 27/36; B32B 27/365; B32B 27/40;**
**B33Y 70/00; C08G 69/14; C08G 69/265;**
**C08G 69/32; C08L 77/02; C08L 77/06; D01F 1/10;**
B32B 2250/02; B32B 2250/24; B32B 2262/062;
B32B 2262/101; B32B 2262/103; B32B 2262/105;
B32B 2262/106; B32B 2264/0214;
B32B 2264/0235; B32B 2264/025; B32B 2264/101;
B32B 2264/102; B32B 2264/104; B32B 2264/105;
B32B 2264/108; B32B 2270/00; B32B 2307/306;
B32B 2307/542; B32B 2307/546; B32B 2307/558;
B32B 2307/704; B32B 2307/714; B32B 2307/734;

B32B 2307/75; B32B 2410/00; B32B 2419/00;
B32B 2457/00; B32B 2509/00; B32B 2535/00;
B32B 2571/00; B32B 2605/08

C-Sets
**C08L 77/02, C08L 77/06;**
**C08L 77/06, C08L 77/02**

**Description**

TECHNICAL FIELD

The present invention relates to a 3D printer material and particularly to a material extrusion type (ME type) 3D printer filament.
The present invention also relates to a 3D printer filament, a resin molded body, a roll, and a cartridge for mounting in a 3D printer.

BACKGROUND ART

An additive printing technology (additive manufacturing), namely, a system commonly referred to today as a three-dimensional printer (3D printer) (for example, a thermal lamination deposition system manufactured by Stratasys Inc., U.S.A.), is used to build a 3D object in layers based on a computer aided design (CAD) model. Among these, a material extrusion method (ME method) has been widely used because it is a simple system in which a raw material in the form of a filament composed of a thermoplastic resin is inserted into an extrusion head and while being fused by heating, continuously extruded from a nozzle region provided in the extrusion head onto the X-Y plane of a substrate within the chamber, the extruded resin is deposited on and fused to a resin laminate which has already been deposited, and as the resin cools, it solidifies and integrated with the laminate. In the ME method, a 3D object resembling a CAD model is built generally by repeating the above extrusion step with shifting of the nozzle position relative to the substrate upward into the Z-axis direction that is a direction perpendicular to the X-Y plane (Patent Literatures 1 and 2).
In the related art, as the 3D printer material used for the ME method, from the viewpoints of molding processability or flowability, a thermoplastic resin such as acrylonitrile-butadiene-styrene resin and polylactic acid formed into a filament form has been suitably used in general (Patent Literatures 3 to 5). In addition, for example, a technique of imparting a filament a plurality of functions by forming the filament into a multi-layer structure is also disclosed (Patent Literature 6).
On the other hand, in recent years, in addition to the above-mentioned general-purpose plastics, commercialization of engineering plastic filaments such as a polyamide-based resin has been studied. Because of having excellent heat resistance, chemical resistance, strength, etc., these engineering plastic filaments can be widely used for industrial applications such as printing of products and manufacturing tools. As the polyamide-based resin, those having a low crystal melting temperature (melting point Tm) such as polyamide 12 have been used from the viewpoint of printability. Filaments for 3D printing comprising polyamide are disclosed in Patent Literatures 7 to 9.

CITATION LIST

PATENT LITERATURE

Patent Literature 1: JP-T-2003-502184
Patent Literature 2: JP-T-2003-534159
Patent Literature 3: JP-T-2010-521339
Patent Literature 4: JP-A-2008-194968
Patent Literature 5: WO 2015/037574
Patent Literature 6: JP-A-2016-193602
Patent Literature 7: US-A-2012 070619
Patent Literature 8: JP-A-2016-505409
Patent Literature 9: JP-A-2017-502852

SUMMARY OF INVENTION

TECHNICAL PROBLEM

However, among such polyamide-based resins, as a general-purpose resin, a commonly used crystalline polyamide-based resin having a high crystal melting temperature (melting point Tm, generally higher than 200°C) has a too fast crystallization rate. Therefore, when using the crystalline polyamide-based resin having a high crystal melting temperature (melting point Tm) as the 3D printer material, the printability of the 3D printer material is low, for example, the modeled resin molded body has low interlayer adhesiveness or warpage due to crystallization shrinkage during printing.
On the other hand, the crystalline polyamide-based resin having a low crystal melting temperature (melting point Tm), such as polyamide 12 has a low crystallization rate and is thus used for printing with relatively slight problems of the interlayer adhesiveness and warpage of the modeled resin molded body during printing. However, there are problems that the rigidity and heat resistance of the obtained resin molded body are insufficient, and the applicable fields are thus limited.

In addition, in the case of forming the filament into a multi-layer structure by using the method disclosed in Patent Literature 6, it is considered possible to solve the problems of filament strength and moisture absorption individually. However, the above-described problems including the interlayer adhesiveness, warpage, and heat resistance of the modeled resin molded body are not mentioned in Patent Literature 6, and no specific solution to solve these problems is shown.

Therefore, an object of the present invention is to provide a 3D printer material, particularly a material extrusion type (ME type) 3D printer filament, from which a resin molded body excellent in properties such as interlayer adhesiveness and heat resistance can be modeled, and which is excellent in printability with less warpage during printing.

SOLUTION TO PROBLEM

As a result of intensive studies, the inventors of the present invention have found that the above-described objects can be achieved by forming a 3D printer material into a multi-layer structure and using, as an outer layer, a resin composition which contains a crystalline polyamide-based resin and a component that delays crystallization of the crystalline polyamide-based resin and has specific thermal properties, and the present invention has been completed.

That is, the gist of the present invention resides in the appended claims.

ADVANTAGEOUS EFFECTS OF INVENTION

According to the present invention, it is possible to provide a 3D printer material, particularly a material extrusion type (ME type) 3D printer filament, from which a resin molded body excellent in properties such as interlayer adhesiveness and heat resistance can be modeled, and which is excellent in printability with less warpage during printing.

In addition, in the present invention, since it is possible to blend commercially available raw materials to adjust the above properties, it is expected that the degree of freedom in raw material selection and the industrial productivity can be improved.

BRIEF DESCRIPTION OF DRAWINGS

[Fig. 1] Fig. 1 is a schematic diagram showing a multi-layer structure in a 3D printer material according to the present invention.
[Fig. 2] Fig. 2 is a schematic view showing an example of an embodiment of a resin molded body according to the present invention.

DESCRIPTION OF EMBODIMENTS

Hereinafter, modes for carrying out the present invention (hereinafter, referred to as "the present embodiment") will be described in detail. The embodiment below is merely an example for describing the present invention and the present invention is not intended to be limited to the embodiment. The present invention can be implemented with various modifications within the scope of the gist thereof.

The 3D printer material according to the present invention includes an outer layer and an inner layer, and the outer layer contains a crystalline polyamide-based resin (A) to be described later and a component (B) that delays crystallization of the crystalline polyamide-based resin (A), to be described later.

<Crystalline Polyamide-based Resin (A)>

Here, the crystalline polyamide-based resin (A) is not particularly limited, and specific examples thereof include the following. That is, polycaproamide (polyamide 6), polyhexamethylene adipamide (polyamide 66), polytetramethylene adipamide (polyamide 46), polyhexamethylene sebacamide (polyamide 610), polyhexamethylene dodecamide (polyamide 612), polyundecamethylene adipamide (polyamide 116), polybis(4-aminocyclohexyl)methandodecamide (polyamide PACM12), polybis(3-methyl-4aminocyclohexyl)methandodecamide (polyamide dimethyl PACM12), polynonamethylene terephthalamide (polyamide 9T), polydecamethylene terephthalamide (polyamide 10T), polyundecamethylene terephthalamide (polyamide 11T), polyundecamethylene hexahydroterephthalamide (polyamide 11T(H)), polyundecamide (polyamide 11), polydodecamide (polyamide 12), polytrimethylhexamethylene terephthalamide (polyamide TMDT), polyhexamethylene isophthalamide (polyamide 6I), polyhexamethylene terephthal/isophthalamide (polyamide 6T/6I), polymeta-xylylene adipamide (polyamide MXD6), and a copolymer thereof. The crystalline polyamide-based resin (A) can be used alone or in combination of two or more thereof.

Among these, polyamide 6, polyamide 66, polyamide MXD6, polyamide 9T, polyamide 10T, and a copolyamide thereof are preferred from the viewpoints of moldability, surface appearance, and chemical resistance, polyamide 9T and polyamide 10T are more preferred from the viewpoints of high excellent heat resistance and mechanical strength, and polyamide 6 and polyamide 66 are more preferred from the viewpoint of balance between heat resistance and economic efficiency. Further, it is also practically preferable to use these crystalline polyamide-based resins as a mixture depending on the required properties such as impact resistance and molding processability.

The heat quantity of crystallization ($\Delta Hc$) of the crystalline polyamide-based resin (A) measured at a cooling rate of 10°C/min in differential scanning calorimetry is preferably 30 J/g or more and 100 J/g or less. Being within this range is preferred since it is easy to adjust the balance of heat resistance, chemical resistance, and mechanical strength even for the resin composition (C) by blending with the component (B) that delays crystallization of the crystalline polyamide-based resin (A), to be described later. Therefore, the heat quantity of crystallization of the crystalline polyamide-based resin (A) is more preferably 40 J/g or more and 80 J/g or less.

Here, the heat quantity of crystallization ($\Delta Hc$) is a value measured using a differential scanning calorimeter (DSC) according to JIS K7122 when about 10 mg of a sample is heated from room temperature to a crystal melting temperature (melting point Tm) + 20°C at a heating rate of 10°C/min, held at the temperature for 1 minute, and then cooled to 30°C at a cooling rate of 10°C/min.

The crystal melting temperature (melting point Tm) of the crystalline polyamide-based resin (A) is not particularly limited, and is generally from 120°C to 320°C.

The crystal melting temperature (melting point Tm) being lower than 260°C is preferred since many commercially available printers can be used and power consumption can be prevented by setting the printing temperature to be low. On the other hand, the crystal melting temperature (melting point Tm) being 260°C or higher is preferred since the heat resistance is easily ensured, and resistance is easily obtained in a solder reflow step for printed circuit boards. Therefore, the crystal melting temperature (melting point Tm) of the crystalline polyamide-based resin (A) is more preferably 120°C or higher and lower than 260°C, or 260°C or higher and 320°C or lower, and more preferably 160°C or higher and lower than 230°C, or 270°C or higher and 310°C or lower.

<Component (B) that Delays Crystallization of Crystalline Polyamide-based Resin (A)>

The component (B) that delays crystallization of the crystalline polyamide-based resin (A) (hereinafter, may be simply referred to as the component (B)) is not particularly limited as long as it can delays crystallization of the crystalline polyamide-based resin (A), and examples thereof include an additive that delays crystallization, and a resin having a structure that delays crystallization.

Here, the delay of the crystallization of the crystalline polyamide-based resin (A) can be confirmed by, as compared with the crystalline polyamide-based resin (A) alone, a decrease in heat quantitiy of crystallization ($\Delta Hc$) of the resin composition (C) to be described later, or an increase in difference (Tm - Tc (cooling process)) between the crystal melting temperature (melting point Tm) and the crystallization temperature (Tc (cooling process)) of the resin composition (C).

(Additive that Delays Crystallization)

Examples of the additive that delays crystallization include an aromatic compound, a polycyclic aromatic compound, and a metal salt. Among these, for example, nigrosine and a lithium salt are preferred.

(Resin Having Structure that Delays Crystallization)

The structure that delays crystallization is preferably a ring structure. The ring structure can be inserted into the resin by polymerizing the resin using one or more of a cyclic diamine, an aromatic diamine, a cyclic dicarboxylic acid, and an aromatic dicarboxylic acid.

Specific examples of the above diamine or dicarboxylic acid as a ring structure include isophthalic acid, terephthalic acid, 4,4-methylenebiscyclohexylamine, and 4,4-methylenebis(2-methylcyclohexylamine).

The resin having a structure that delays the crystallization is preferably an amorphous polyamide-based resin from the viewpoint of easily controlling the heat quantitiy of crystallization ($\Delta Hc$) of the resin composition (C) to be described later in a desired range.

(Amorphous Polyamide-based Resin)

The amorphous polyamide-based resin is not particularly limited, and the heat quantitiy of crystallization thereof measured at a cooling rate of 10°C/min in the differential scanning calorimetry is preferably less than 5 J/g. In the present invention, the heat quantitiy of crystallization of the amorphous polyamide-based resin is more preferably 0 J/g.

As a specific example, a polycondensate containing from 30 to 70 mol%, and more preferably from 40 to 60 mol% of isophthalic acid is preferred as a dicarboxylic acid component.

Examples of such a polycondensate include the following. That is, a polycondensate of isophthalic acid/$\alpha,\omega$-linear aliphatic dicarboxylic acid having 4 to 20 carbon atoms/meta-xylylenediamine, a polycondensate of isophthalic acid/terephthalic acid/hexamethylenediamine, a polycondensate of isophthalic acid/terephthalic acid/hexamethylenediamine/bis(3-methyl-4-aminocyclohexyl)methane, a polycondensate of terephthalic acid/2,2,4-trimethylhexamethylenediamine/2,4,4-trimethylhexamethylenediamine, a polycondensate of isophthalic acid/bis(3-methyl-4-aminocyclohexyl)methane/$\omega$-laurolactam, a polycondensate of isophthalic acid/2,2,4-trimethylhexamethylenediamine/2,4,4-trimethylhexamethylenediamine, a polycondensate of isophthalic acid/terephthalic acid/2,2,4-trimethylhexamethylenediamine/2,4,4-trimethylhexamethylenediamine, and a polycondensate of isophthalic acid/bis(3-methyl-4-aminocyclohexyl)methane/$\omega$-laurolactam. In addition, those in which the benzene ring of the terephthalic acid component and/or the isophthalic acid component constituting these polycondensates is substituted with an alkyl group or a halogen atom are also included. These amorphous polyamide-based resins can be used in combination of two or more thereof.

Preferably, a mixture of a polycondensate of terephthalic acid/2,2,4-trimethylhexamethylenediamine/2,4,4-trimethylhexamethylenediamine with a polycondensate of isophthalic acid/$\alpha,\omega$-linear aliphatic dicarboxylic acid having 4 to 20 carbon atoms/meta-xylylenediamine, a polycondensate of isophthalic acid/terephthalic acid/hexamethylenediamine/bis(3-methyl-4-aminocyclohexyl)methane, a polycondensate of terephthalic acid/2,2,4-trimethylhexamethylenediamine/2,4,4-trimethylhexamethylenediamine, or a polycondensate of isophthalic acid/terephthalic acid/hexamethylenediamine/bis(3-methyl-4-aminocyclohexyl)methane is used.

In the present invention, a polycondensate of isophthalic acid/$\alpha,\omega$-linear aliphatic dicarboxylic acid having 4 to 20 carbon atoms/meta-xylylenediamine is particularly preferred from the viewpoints of miscibility with the crystalline polyamide-based resin, gas barrier properties, rigidity, heat resistance and low water absorption.

Here, the lower limit of the molar ratio of isophthalic acid to the total amount of isophthalic acid and $\alpha,\omega$-linear chain aliphatic dicarboxylic acid having 4 to 20 carbon atoms is preferably 40 mol% or more, and more preferably 45 mol% or more, from the viewpoint of making the heat quantitiy of crystallization within the above range. On the other hand, the upper limit thereof is preferably 60 mol% or less, and more preferably 55 mol% or less.

In the present invention, the glass transition temperature (Tg (reheating process)) of the amorphous polyamide-based resin is not particularly limited, and is preferably 80°C or higher, more preferably 100°C or higher, and still more preferably 120°C or higher. On the other hand, the upper limit of the glass transition temperature is preferably 200°C or lower, more preferably 180°C or lower, still more preferably 160°C or lower, and most preferably 145°C or lower, from the viewpoint of preventing warpage during printing of the resin molded body. The glass transition temperature of the amorphous polyamide-based resin being within the above range is preferred since more excellent heat resistance, printability, and surface appearance can be obtained for the resin composition (C) by blending with the crystalline polyamide-based resin (A).

Here, the glass transition temperature (Tg (reheating process)) is a value, measured using a differential scanning calorimeter (DSC) according to JIS K7121 when about 10 mg of a sample is heated from room temperature to a crystal melting temperature (melting point Tm) + 20°C at a heating rate of 10°C/min, held at the temperature for 1 minute, then cooled to 30°C at a cooling rate of 10°C/min, and again heated to 280°C at a heating rate of 10°C/min.

In the present invention, the glass transition temperature (Tg (reheating process)) of the amorphous polyamide-based resin is preferably higher than the glass transition temperature (Tg (reheating process)) of the crystalline polyamide-based resin (A) by 30°C or more. Here, as a rule of thumb, a normal crystalline polymer has a correlation of Tg $\approx$ (1/2)Tm to (2/3)Tm(K) (see color material, 68[1], P.45 (1995)). That is, it is known that when the crystalline polymer alone is used to increase the Tg (reheating process), the Tm also increases, resulting in a decrease in flowability and a deterioration in the molding processability. Therefore, when the crystalline polyamide-based resin (A) is mixed with the amorphous polyamide-based resin (B) having a high Tg (reheating process)), it is possible to increase Tg (reheating process) while maintaining Tm to some extent for the composition. Therefore, the glass transition temperature (Tg (reheating process) of the amorphous polyamide-based resin is more preferably higher than the glass transition temperature (Tg (reheating process) of the crystalline polyamide-based resin (A) by 50°C or more.

The relative viscosities of the crystalline polyamide-based resin (A) and the amorphous polyamide-based resin for use in the present invention are not particularly limited. The relative viscosity measured using 96 mass% concentrated sulfuric acid as a solvent under conditions of a temperature of 25°C and a concentration of 1 g/dl is preferably in the range of from 1.5 to 5.0. This range is preferred since balance between take-off properties or mechanical strength and molding processability after melt-kneading is excellent. Therefore, the relative viscosity is more preferably in the range of from 2.0 to 4.0.

The crystalline polyamide-based resin (A) and the amorphous polyamide-based resin for use in the present invention can be polymerized by a known method, and commercially available products thereof can be used.

Here, examples of the polymerization method include the following methods [1] to [6]. Further, a batch type or a continuous type can be appropriately selected.

[1] A method of heating an aqueous solution or an aqueous suspension of a dicarboxylic acid and a diamine salt or a mixture thereof to polymerize the obtained substance while maintaining a molten state (thermal melting polymerization method).

[2] A method of increasing the degree of polymerization while maintaining the solid state of the polyamide obtained by the thermal melting polymerization method at a temperature equal to or lower than the melting point (hot melt polymerization/solid phase polymerization method).

[3] A method of heating an aqueous solution or an aqueous suspension of a dicarboxylic acid and a diamine salt or a mixture thereof, and melting again the precipitated prepolymer with an extruder such as a kneader to increase the degree of polymerization (prepolymer/extrusion polymerization method).

[4] A method of heating an aqueous solution or an aqueous suspension of a dicarboxylic acid and a diamine salt or a mixture thereof, and further increasing the degree of polymerization of the precipitated prepolymer at a temperature equal to or lower than the melting point of the polyamide while maintaining the solid state (prepolymer/solid phase polymerization method).

[5] A method of polymerizing a dicarboxylic acid and a diamine salt or a mixture thereof in one stage while maintaining the solid state (one-stage solid phase polymerization method).

[6] A method of polymerizing using a dicarboxylic acid halide equivalent to a dicarboxylic acid and diamine (solution method).

<Resin Composition (C)>

The resin composition (C) according to the present invention contains the crystalline polyamide-based resin (A) and the component (B). When the resin composition (C) contains the component (B), the crystallization of the crystalline polyamide-based resin (A) is moderately delayed, and the interlayer adhesiveness of the resin molded body to be described later can be enhanced.

The resin composition (C) being the mixture of the crystalline polyamide-based resin (A) and the component (B) can be confirmed by structural analysis using a nuclear magnetic resonance apparatus (NMR) or by confirming the mixed state of the resin composition using an electron microscope. Here, it is preferable that the amorphous polyamide-based resin is used as the component (B) and the resin composition (C) is produced as a mixture of the component (B) and the crystalline polyamide-based resin (A), from the viewpoint of easily adjusting the glass transition temperature (Tg (reheating process)) of the resin composition (C).

For a resin mixture (blend of two or more polymers) and a resin copolymer (one polymer), the relationship between Tg (reheating process) and Tm deviates from the above rule of thumb, so that it is also possible to confirm the resin composition (C) according to the present invention from the difference.

Here, the heat quantitiy of crystallization ($\Delta$Hc) of the resin composition (C) measured at a cooling rate of 10°C/min in the differential scanning calorimetry is preferably 1 J/g or more, more preferably 5 J/g or more, and still more preferably 10 J/g or more, from the viewpoint of the heat resistance of the resin molded body to be described later. In addition, the heat quantitiy of crystallization ($\Delta$Hc) is preferably 60 J/g or less, more preferably 50 J/g or less, and still more preferably 45 J/g or less, from the viewpoint of the interlayer adhesiveness of the resin molded body to be described later.

In the differential scanning calorimetry, the heat quantitiy of crystallization when a plurality of crystallization temperatures (Tc (cooling process)) are expressed in the cooling process is a value obtained by adding the heats of crystallization at the respective temperatures. In the present invention, one crystallization temperature of the resin composition (C) is preferable.

In the present invention, the heat quantitiy of crystallization is preferably adjusted by the mixing mass ratio of the crystalline polyamide-based resin (A) and the component (B). The mixing mass ratio may be appropriately adjusted according to the thermal properties and types of the crystalline polyamide-based resin (A) and the component (B) to be used. when the total amount of the crystalline polyamide-based resin (A) and the component (B) is 100 parts by mass, it is preferable that the blending amount of the crystalline polyamide-based resin (A) is from 99 to 1 part by mass, and the blending amount of the component (B) is from 1 to 99 parts by mass.

Further, in the case of using, for example, an amorphous polyamide-based resin as the component (B), when the total amount of the crystalline polyamide-based resin (A) and the component (B) is 100 parts by mass, the blending amount of the crystalline polyamide-based resin (A) is more preferably 10 parts by mass or more, still more preferably 20 parts by mass or more, and particularly preferably 30 parts by mass or more. On the other hand, the upper limit of the blending amount of the crystalline polyamide-based resin (A) is more preferably 85 parts by mass or less, still more preferably 80 parts by mass or less, and particularly preferably 75 parts by mass or less.

The difference (Tm - Tc (cooling process)) between the crystal melting temperature (melting point Tm) and the crystallization temperature (Tc (cooling process)) of the resin composition (C) in the differential scanning calorimetry is preferably from 30°C to 90°C, and more preferably from 30°C to 60°C. The differnce (Tm - Tc (cooling process)) being within this range is preferred since the crystallization rate is moderately slow, the interlayer adhesiveness is ensured when a resin molded body is modeled by a 3D printer, the warpage during the printing is prevented, poor appearance in printing such as cobwebbing is also prevented, and the printability is excellent. Therefore, the difference is more preferably from 35°C to 55°C, and particularly preferably from 38°C to 55°C.

Here, the crystallization temperature (Tc (cooling process)) is a value measured using a differential scanning calorimeter (DSC) when about 10 mg of a sample is heated from room temperature to a crystal melting temperature (melting point Tm) + 20°C at a heating rate of 10°C/min, held at the temperature for 1 minute, and then cooled to 30°C at a cooling rate of 10°C/min. In the differential scanning calorimetry, the difference (Tm - Tc (cooling process)) between the crystal melting temperature (melting point Tm) and the crystallization temperature (Tc (cooling process)) when a plurality of crystal melting temperatures (melting point Tm) and crystallization temperatures (Tc (cooling process)) are expressed is calculated using the crystal melting temperature (melting point Tm) and the crystallization temperature (Tc (cooling process)) each having the largest amount of heat (heat of crystal melting, heat quantity of crystallization).

The resin composition (C) according to the present invention may contain other components to the extent that the effects of the present invention are not impaired. Examples of the other components include a polymer other than polyamide-based resins, a heat-resistant agent, an ultraviolet absorber, a light stabilizer, an antioxidant, an antistatic agent, a lubricant, a slip agent, a crystal nucleating agent, a tackifier, a sealability improver, an antifogging agent, a release agent, a plasticizer, a pigment, a dye, a fragrance, a flame retardant, organic particles, inorganic particles, and a reinforcing material.

Here, specific examples of the polymer other than polyamide-based resins include a acrylonitrile-butadiene-styrene-based resin (ABS-based resin), polylactic acid (PLA resin), a polyurethane-based resin, a polyolefin-based resin, a polyester-based resin, a polystyrene-based resin, an acrylic resin, a polycarbonate-based resin, a polyvinyl-based chloride resin, a silicone-based resin, and various rubbers and elastomers.

In the present invention, it is preferable to use various rubbers and elastomers when imparting impact resistance and flexibility.

Here, specific examples of the organic particles include acrylic resin particles, melamine resin particles, silicone resin particles, and polystyrene resin particles.

Here, specific examples of the inorganic particles include silica, alumina, kaolin, titanium dioxide, calcium carbonate, magnesium carbonate, zinc carbonate, calcium stearate, magnesium stearate, and zinc stearate.

Here, specific examples of the reinforcing material include an inorganic filler and an inorganic fiber.

Specific examples of the inorganic filler include calcium carbonate, zinc carbonate, magnesium oxide, calcium silicate, sodium aluminate, calcium aluminate, sodium aluminosilicate, magnesium silicate, potassium titanate, glass balloons, glass flakes, glass powders, silicon carbide, silicon nitride, boron nitride, gypsum, calcined kaolin, zinc oxide, antimony trioxide, zeolite, hydrotalcite, wollastonite, silica, talc, metal powders, alumina, graphite, carbon black, and carbon nanotube.

Specific examples of the inorganic fiber include glass cut fibers, glass milled fibers, glass fibers, gypsum whiskers, metal fibers, metal whiskers, ceramic whiskers, carbon fibers, and cellulose nanofibers.

(Method for Producing Resin Composition (C))

The resin composition (C) can be produced by mixing the crystalline polyamide-based resin (A) and the component (B).

The mixing method for obtaining the resin composition (C) is not particularly limited. Known methods, for example, melt-kneading devices such as a single-screw extruder, a multi-screw extruder, a Banbury mixer, a kneader, or a roll mill can be used. In the present invention, it is preferable to use a same-direction twin-screw extruder from the viewpoints of dispersibility and miscibility of each component. The resin composition (C) being excellent in dispersibility and miscibility is preferred since it is possible to prevent the unevenness of the extrusion amount when producing the filament to be described later, and to improve the accuracy and circularity of the filament diameter.

In the method for producing the resin composition (C), the melt-kneading device may be any one of an extruder, a Banbury mixer, a kneader, a roll mill, as long as it is a device capable of melt-kneading the crystalline polyamide-based resin (A) and the component (B), and is preferably an extruder from the viewpoints of enabling continuous production and being capable of adding various kinds of raw materials as separate feeds. When using an extruder, the ratio (L/D) of the screw length (L) to the screw diameter (D) of the extruder is not particularly limited, and is preferably from 20 to 80, more preferably from 25 to 70, still more preferably from 30 to 60, and particularly preferably from 35 to 50, from the viewpoint of the dispersibility of the crystalline polyamide-based resin (A) and the component (B) with each other.

In the present invention, the extruder may be any of a single-screw extruder, a twin-screw extruder, a multi-screw extruder, or a composite-type extruder such as a twin-screw/single-screw composite-type extruder in which the single-screw extruder and the twin-screw extruder are combined, and is preferably a twin-screw extruder from the viewpoints of operability during operation, easy cleaning, being capable of improving the dispersibility of the crystalline polyamide-based resin (A) and the component (B) with each other, and being capable of improving heat resistance and mechanical properties.

In the present invention, when a twin-screw extruder, a multi-screw extruder, or an extruder with two or more screws, such as a twin-screw/single-screw composite-type extruder, is used as the melt-kneading device, the screw structure may be either a non-meshing type or a meshing type, and a meshing type is preferred from the viewpoint of good dispersibility.

In the present invention, when a twin-screw extruder, a multi-screw extruder, or an extruder with two or more screws, such as a twin-screw/single-screw composite-type extruder, is used as the melt-kneading device, the rotation directions of respective screws may be the same direction or different directions.

In the present invention, the residence time is preferably from 30 to 300 seconds. Further, from the viewpoints of being capable of sufficiently kneading and dispersing the crystalline polyamide-based resin (A) and the component (B) and preventing the decomposition of the polyamide-based resin, the residence time is more preferably from 45 to 250 seconds, still more preferably from 60 to 200 seconds, and particularly preferably from 60 to 180 seconds. Here, the residence time refers to the time from the charging and the melt-kneading of the raw materials to the removal of the resin composition.

In the present invention, the shear rate is preferably from 10 to 1,500 sec$^{-1}$. Further, from the viewpoints of sufficiently kneading and dispersing the crystalline polyamide-based resin (A) and the component (B) and obtaining a stable and good color tone, the shear rate is more preferably from 30 to 1,300 sec$^{-1}$, still more preferably from 50 to 1,100 sec$^{-1}$, even more preferably from 70 to 1,000 sec$^{-1}$, particularly preferably from 90 to 800 sec$^{-1}$, and most preferably from 110 to 600 sec$^{-1}$. Here, the shear rate is a velocity gradient per unit time. Generally, the shear rate when performing shear deformation between two surfaces can be obtained by the following equation.

$$\text{Shear rate} = \text{speed difference between two surfaces} / \text{distance between two surfaces}$$

In the present invention, the screw rotation speed of the melt-kneading device is not particularly limited, and is preferably from 10 to 500 rpm, more preferably from 30 to 350 rpm, and still more preferably from 50 to 300 rpm from the viewpoint of being capable of preventing a rise in resin temperature due to shear heat generation.

In the present invention, it is preferable to introduce an inert gas such as nitrogen or perform melt-kneading under reduced pressure conditions from the viewpoint of being capable of obtaining a resin composition having a stable and good color tone.

The water content of the resin composition (C) according to the present invention is preferably 2.5 mass% or less. The water content is more preferably 2.0 mass% or less, still more preferably 1.5 mass% or less, and particularly preferably 1.0 mass% or less. The water content may be 0.3 mass% or more and may be 0.6 mass% or more. This range is preferred since foam generation and smoke generation are slight during extrusion and dimensional stability and mechanical strength are stable. This property is measured by the Karl Fischer method.

Therefore, the resin composition (C) is preferably dried and stored in a moisture-proof packaging material (such as an aluminum bag, a vapor deposition film, or a glass container) after production.

<3D Printer Material>

The 3D printer material according to the present invention includes an outer layer containing the resin composition (C). In addition, the 3D printer material according to the present invention preferably has two or more crystallization temperatures (Tc (cooling process)) measured at a cooling rate of 10°C/min in the differential scanning calorimetry. In order to have two or more crystallization temperatures (Tc (cooling process)), a method of increasing the absolute value of the difference between the crystallization temperature (Tc (cooling process)) of the resin composition (C) contained in the outer layer and the crystallization temperature (Tc (cooling process)) of the resin composition contained in the inner layer to greater than 0, or a method of forming one or more of the outer layer and the inner layer with a resin composition having two or more crystallization temperatures (Tc (cooling process)) may be used. The former is preferred from the viewpoint of improving properties such as the printability (warpage prevention or the like), and the heat resistance and interlayer adhesiveness of the modeled resin molded body at the same time. That is, when resin compositions having different crystallization temperatures (Tc (cooling process)) are used as the resin compositions contained in the outer layer and the inner layer, the above properties can be improved at the same time. The number of the crystallization temperature (Tc (cooling process)) is preferably 3 or less, and more preferably 2 in consideration of a preferred multi-layer structure to be described later.

In the 3D printer material according to the present invention, the crystallization temperature (Tc (cooling process)) of the resin composition (C) contained in the outer layer is preferably lower than the crystallization temperature (Tc (cooling process)) of the resin composition contained in the inner layer.
Accordingly, while maintaining the heat resistance of the 3D printer material, the interlayer adhesiveness can be ensure when a resin molded body is modeled by a 3D printer. Therefore, the crystallization temperature (Tc (cooling process)) of the resin composition (C) contained in the outer layer is preferably 190°C or lower, more preferably 180°C or lower, and particularly preferably 175°C or lower.

In addition, the heat quantitiy of crystallization (ΔHc) of the 3D printer material according to the present invention measured at a cooling rate of 10°C/min in the differential scanning calorimetry is from 20 to 60 J/g. Here, the 3D printer material according to the present invention may sometimes have a plurality of crystallization temperatures (Tc (cooling process)) in the cooling process in the differential scanning calorimetry, and in this case, the heat quantitiy of crystallization (ΔHc) is a value obtained by adding the heats of crystallization at the respective crystallization temperatures (Tc (cooling process)).

The heat quantitiy of crystallization (ΔHc) of the 3D printer material according to the present invention is preferably 58 J/g or less, and more preferably 55 J/g or less, from the viewpoints of reducing the amount of crystallization shrinkage and preventing the warpage during the printing. In addition, the heat quantitiy of crystallization (ΔHc) is preferably 22 J/g or more, more preferably 30 J/g or more, and still more preferably 35 J/g or more, from the viewpoint of the heat resistance of the resin molded body to be described.

When the 3D printer material according to the present invention has such a specific multi-layer structure, the interlayer adhesiveness and the heat resistance of the modeled resin molded body can be improved while preventing the warpage during the printing.

Here, the outer layer is a layer occupying most of the surface of the 3D printer material according to the present invention. It should be noted that "most" means that 50% or more of the surface area of the 3D printer material according to the present invention is occupied. The outer layer preferably occupies 80% or more, and more preferably 100% of the surface area of the 3D printer material according to the present invention.

The content of the resin composition (C) in the outer layer is preferably from 50 to 100 mass%, and more preferably from 80 to 100 mass% from the viewpoints of the balance between the printability and the heat resistance, and the interlayer adhesiveness. The outer layer more preferably contains the resin composition (C).

The outer layer may contain components other than the resin composition (C) to the extent that the effects of the present invention are not impaired. Examples of the components other the resin composition (C) include a polymer other than polyamide-based resins, a heat-resistant agent, an ultraviolet absorber, a light stabilizer, an antioxidant, an antistatic agent, a lubricant, a slip agent, a crystal nucleating agent, a tackifier, a sealability improver, an antifogging agent, a release agent, a plasticizer, a pigment, a dye, a fragrance, a flame retardant, organic particles, inorganic particles, and a reinforcing material.

The heat quantitiy of crystallization of the 3D printer material according to the present invention when heating is performed again at a heating rate of 10°C/min using a differential scanning calorimeter (DSC) is preferably less than 10 J/g, more preferably less than 1 J/g, and still more preferably 0 J/g. That is, the 3D printer material according to the present invention preferably has no crystallization temperature in the reheating process at 10°C/min, that is, crystallization is sufficiently completed in the cooling process at 10°C/min. Thereby, the crystallization step by a heat treatment after printing can be omitted. When crystallization is not completed during the printing, it is preferable to promote crystallization by a heat treatment.

In the 3D printer material according to the present invention, a difference in heat of crystallization (ΔHc) between the inner layer and the outer layer measured at a cooling rate of 10°C/min in the differential scanning calorimetry preferably satisfies the following expression (1). Satisfying the following expression (1) is preferred since the balance between the printability for a 3D printer material and the heat resistance of the resin molded body modeled using the 3D printer material is excellent and the interlayer adhesiveness between the inner layer and the outer layer is also excellent.

$$0 < \text{absolute value of difference in } \Delta Hc \text{ between inner layer and outer layer (J/g)} \leq 60 \qquad \text{Expression (1)}$$

The ΔHc of each layer may be obtained by measuring the ΔHc of the resin composition forming each layer. From the viewpoints of ensuring the interlayer adhesiveness when a resin molded body is modeled by a 3D printer while maintaining the heat resistance of the 3D printer material, the ΔHc of the outer layer is preferably smaller than the ΔHc of the inner layer.

In addition, in the 3D printer material according to the present invention, the difference in heat quantitiy of crystallization (ΔHc) between the inner layer and the outer layer measured at a cooling rate of 10°C/min in the differential scanning calorimetry more preferably satisfies the following expression (2).

$$1 < \text{absolute value of difference in } \Delta Hc \text{ between inner layer and outer layer (J/g)} \leq 50 \qquad \text{Expression (2)}$$

The lower limit of the ΔHc of the outer layer is preferably 10 J/g or more, more preferably 12 J/g or more, and still more preferably 15 J/g or more, from the viewpoint of the heat resistance. On the other hand, the upper limit of the ΔHc of the outer layer is preferably 50 J/g or less, more preferably 45 J/g or less, and still more preferably 40 J/g or less, from the viewpoints of preventing the warpage of the filament and improving the interlayer adhesiveness.

The multi-layer structure of the 3D printer material according to the present invention is not particularly limited as long as it has the inner layer and the outer layer containing the resin composition (C).

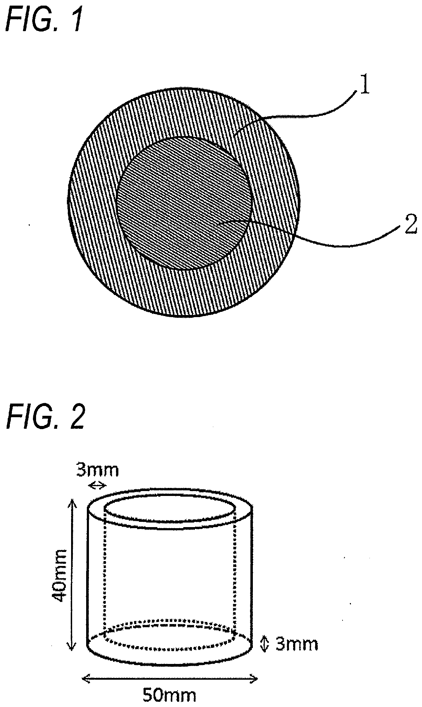

Here, the multi-layer structure in the 3D printer material according to the present invention will be described with reference to Fig. 1. Fig. 1 is a sectional view of the 3D printer material, and is a view in which, for example, when the 3D printer material is in a filament form, an optional portion of the filament is cut perpendicularly to the long axis to observe a cross section. As shown in Fig. 1, in a pattern having a two-layer structure using two kinds of resin compositions, 1 denotes an outer layer and 2 denotes an inner layer in Fig. 1. The "difference in ΔHc between the outer layer and the inner layer" is "a difference between the ΔHc of the resin composition forming 1 (outer layer) and the ΔHc of the resin composition forming 2 (inner layer)".

Here, the boundary between the outer layer and the inner layer can be grasped by observing the cross section of the 3D printer material with an optical microscope. The resin composition forming each layer may be cut out to measure the corresponding ΔHc. In Fig. 1, the boundary between the outer layer and the inner layer may be unclear, and in this case, an optional portion of the 3D printer material is cut out to measure the corresponding ΔHc. The multi-layer structure may be a two-layer structure as shown in Fig. 1, or may be a structure having 3 or more layers in which, for example, the inner layer in Fig. 1 is a multi-layer structure. From the viewpoint of productivity, a structure having 3 or less layers is preferred, and a structure having 2 layers is particularly preferred.

The material contained in the inner layer of the 3D printer material according to the present invention is not particularly limited as long as it satisfies the above required physical properties. Examples thereof include an acrylonitrile-butadiene-styrene-based resin (ABS-based resin), polylactic acid (PLA resin), a polyurethane-based resin, a polyolefin-based resin, a polyester-based resin, a polystyrene-based resin, an acrylic resin, a polycarbonate-based resin, a polyvinyl-based chloride resin, a silicone-based resin, a polyamide-based resin, and various rubbers and elastomers.

Particular from the viewpoint of the adhesiveness between the outer layer and the inner layer, the material contained in the inner layer is preferably a polyamide-based resin, for example, the crystalline polyamide-based resin (A) and the amorphous polyamide-based resin described above, or a mixture thereof. The inner layer of the 3D printer material according to the present invention may also contain the above other components.

The content of the polyamide-based resin in the inner layer is preferably from 50 to 100 mass%, and more preferably from 80 to 100 mass% from the viewpoint of adhesiveness to the outer layer. The inner layer is more preferably contains a polyamide-based resin.

The form of the 3D printer material according to the present invention is not particularly limited, and any form is applicable as long as it can be applied to various types of 3D printers such as a material extrusion type (ME type), a powder bed fusion type (PBF type), and a multi-jet fusion type. Examples of this form include powders, pellets, granules, and filament forms. From the versatility of the 3D printer used, the filament form is particularly preferred.

Known methods can be used as the method for producing the 3D printer material in the above forms. For example, examples of the method for producing powders include a dry coating method of mixing particles made of the material forming the inner layer with particles made of the material forming the outer layer by stirring and bonded by mechanical impact, or a wet coating method of coating a coating liquid prepared by dissolving the material forming the outer layer to particles forming the material forming the inner layer. For example, examples of the method for producing pellets include a method of cutting filaments produced by the method to be described later. For example, examples of the method for producing granules include an agitation (rolling) granulation method, a fluidized bed granulation method, and an extrusion granulation method using particles produced by the above method.

The water content of the 3D printer material according to the present invention is preferably 2.5 mass% or less. The water content is more preferably 2.0 mass% or less, still more preferably 1.5 mass% or less, and particularly preferably 1.0 mass% or less. The water content may be 0.3 mass% or more and may be 0.6 mass% or more. This range is preferred since foam generation and smoke generation are slight during printing and dimensional stability and mechanical strength are stable. This property is measured by the Karl Fischer method.

Therefore, the 3D printer material according to the present invention, as well as the filament to be described later, is preferably dried and stored in a moisture-proof packaging material (such as an aluminum bag, a vapor deposition film, or a glass container) after production.

<3D Printer Filament>

(Method for Producing 3D Printer Filament)

The 3D printer filament according to the present invention is produced using the resin composition (C) contained in the outer layer of the 3D printer material and the material contained in the inner layer of the 3D printer material. The method for producing the 3D printer filament according to the present invention is not particularly limited and examples thereof include a method of molding the above resin composition (C) and the resin composition contained in the inner layer of the 3D printer material by generally a known molding method such as lamination extrusion molding, or a method of forming a filament by lamination extrusion molding as it is during the production of each resin composition. For example, when the 3D printer filament according to the present invention is obtained by extrusion molding, the temperature condition is appropriately adjusted depending on the flow properties and molding processability of the resin composition used, and is generally from 150°C to 350°C, and preferably from 170°C to 300°C.

(Physical Properties of 3D Printer Filament)

The diameter of the 3D printer filament according to the present invention depends on specifications of a system used for printing the resin molded body with the material extrusion method (ME method). The diameter is generally 1.0 mm or more, preferably 1.5 mm or more, more preferably 1.6 mm or more, and particularly preferably 1.7 mm or more, and, on the other hand, the upper limit thereof is generally 5.0 mm or less, preferably 4.0 mm or less, more preferably 3.5 mm or less, and particularly preferably 3.0 mm or less. Further, it is preferable that the accuracy of the diameter is within an error of $\pm5\%$ with respect to an optional measurement point of the filament, from the viewpoint of the stability of raw material supply. Particularly, a standard deviation in diameter of the 3D printer filament according to the present invention preferably is 0.07 mm or less, and more preferably 0.06 mm or less.

The ratio of the diameter of the inner layer to the diameter of the 3D printer filament according to the present invention is not particularly limited, and is preferably 10% or more, and more preferably 30% or more. This ratio is preferably 99% or less, and more preferably 95% or less.

The circularity of the 3D printer filament according to the present invention is preferably 0.93 or more, and particularly preferably 0.95 or more as measured by the method described in the section of Examples to be described later. The upper limit of the circularity is 1.0.

Thus, in the case of a 3D printer filament having a small standard deviation in diameter and a high circularity, discharge unevenness during production of the resin molded body to be described later can be prevented and a molded body excellent in appearance and surface properties can be stably produced. When using the above 3D printer material, a 3D printer filament satisfying such standard deviation and circularity can be produced relatively easily.

<Roll of 3D Printer Filament and Cartridge for mounting in a 3D Printer>

When producing a resin molded body by a 3D printer using the 3D printer filament according to the present invention, stable storage of the 3D printer filament and stable supply of the 3D printer filament to the 3D printer are required. Therefore, from the viewpoints of long-term storage, stable delivery, protection from environmental factors such as humidity, and twist prevention, it is preferable that the 3D printer filament according to the present invention is hermetically sealed and packaged in the form of a roll obtained by wounding the filament on a bobbin, or that the roll is housed in a cartridge for mounting in a 3D printer (hereinafter may simply referred to as "cartridge"). Examples of the cartridge include a cartridge having a structure where a desiccant or absorbent is used therein, in addition to a roll obtained by wounding the filament on a bobbin, and the portion except for at least an orifice part for delivering out the 3D printer filament is hermetically sealed.

Generally, a roll obtained by wounding the 3D printer filament on a bobbin, or a cartridge including a roll is installed in or around the 3D printer, and the 3D printer filament is continuously introduced into the 3D printer from the cartridge during molding.

<Resin Molded Body>

(Method for Producing Resin Molded Body)

In the method for producing the resin molded body according to the present invention, a resin molded body is obtained by printing the 3D printer filament according to the present invention using a 3D printer. Examples of the printing method using the 3D printer include a material extrusion method (ME method), a powder bed fusion method (PBF method), a multi-jet fusion method, a material injection method (MJ method), and a liquid tank photopolymerization method (VP method). The 3D printer filament according to the present invention can be suitably used for the material extrusion method (ME method). Hereinafter, the case of the material extrusion method (ME method) will be described as an example.

The 3D printer generally have a chamber, and the chamber is provided with a heatable substrate, an extrusion head installed in a gantry structure, a heating and melting vessel, and a raw material supply part including a filament guide, a filament cartridge installation part, or the like. In some 3D printers, an extrusion head and a heating and melting vessel are integrated together in the inside.

The extrusion head is disposed in the gantry structure and can thereby be optionally moved over the X-Y plane of the substrate. The substrate is a platform for building a target 3D object, a supporting material, etc. and preferably has a specification where adhesiveness to a laminated material is achieved by heating and keeping warm and the dimensional stability of the obtained molded body as a desired 3D object can be improved. In addition, in order to improve the adhesiveness to the laminated material, an adhesive glue may be coated to the substrate, or a sheet or the like having good adhesiveness to the laminated material may be attached to the substrate. Here, examples of the sheet good adhesiveness to the laminated material include a sheet having fine irregularities on the surface such as inorganic fiber sheets, and a sheet made of a resin with the same type as that of the laminated material. Generally, at least either one of the extrusion head and the substrate is movable in the Z-axis direction which is perpendicular to the X-Y plane.

The 3D printer filament is delivered from the raw material supply part, fed to the extrusion head with a pair of facing rollers or gears, heated and melted in the extrusion head, and extruded from the tip end of the nozzle. The extrusion head supplies the raw material onto the substrate, and laminatedly deposits it with changing the position in accordance with signals sent based on a CAD model. After the completion of this step, the laminated object is removed from the substrate and subjected to, if desired, separation of the supporting material, etc. or trimming of unnecessary portions, and a resin molded body as the desired 3D object can thereby be obtained.

Examples of the means for continuously supplying the raw material to the extrusion head include a method of delivering out and supplying a filament or a fiber, a method of supplying a powder or a liquid from a tank, etc. via a constant feeder, and a method of extruding and supplying a material obtained by plasticizing pellets or granules by means of an extruder, etc. Among these, from the viewpoints of step simplicity and supply stability, a method of delivering out and supplying a filament, i.e., a method of delivering out and supplying the above 3D printer filament according to the present invention, is most preferred.

In the case of supplying the filament to the 3D printer, the filament is generally engaged with a drive roll such as nip roll or gear roll and supplied to the extrusion head while being drawn out. Here, in order to stabilize the raw material supply by enhancing the gripping due to engagement of the filament with the drive roll, it is also preferable to transfer minute irregularities beforehand to the filament surface or incorporate an inorganic additive, a spreading agent, a pressure-sensitive adhesive, rubber, etc. for increasing the frictional resistance between the filament and the engaging part. When the filament has an uneven thickness, the filament may not be gripped by the engagement with the drive roll, and the drive roll may idle and the filament may not be supplied to the extrusion head.

For the resin composition (C) for use in the present invention, the temperature for obtaining flowability suitable for extrusion is generally about from 190°C to 300°C, which is a temperature that can be set by a general 3D printer. In the method for producing the resin molded body according to the present invention, the temperature of the heating extrusion head is generally 290°C or lower, preferably from 200°C to 280°C, and the substrate temperature is generally 120°C or lower, so that a resin molded body can be stably produced.

The temperature of the molten resin discharged from the extrusion head (discharge temperature) is preferably 180°C or higher, more preferably 190°C or higher, and is, on the other hand, preferably 300°C or lower, more preferably 290°C or lower, and still preferably 280°C or lower. The temperature of the molten resin being the above lower limit or more is preferred since it is preferable for extruding a resin having high heat resistance, and it becomes possible to discharge the resin at a high speed, which tends to improve printing efficiency. On the other hand, the temperature of the molten resin being the above upper limit or less is preferred from the viewpoints of easily preventing problems such as thermal decomposition, burning, smoke generation, odor emission, and sticking of the resin, and preventing deterioration in appearance caused by broken pieces of the molten resin thinly elongated, which is called cobwebbing, and bulks of the excess resin, which is called lump, adhering to the modeled resin molded body.

The molten resin discharged from the extrusion head is preferably discharged in a strand form having a diameter of from 0.01 to 1.0 mm, and more preferably from 0.02 to 0.5 mm. The molten resin being discharged in such a form is preferred since the reproducibility of the CAD model tends to be good.

In the case of producing the resin molded body by the 3D printer using the 3D printer filament, when making a molded body while laminating the strand-form resin discharged from the extrusion head, irregularities (such as streaks) may occur on the surface of the molded body due to insufficient adhesiveness between the previously discharged resin strand and the resin strand discharged thereon, or due to discharge unevenness. When such irregularities are present on the surface of the molded body, there are problems that not only the appearance may be deteriorated, but also the molded body may be easily damaged.

The 3D printer filament according to the present invention has good adhesiveness between the previously discharged resin strand and the resin strand discharged thereon. In addition, since the 3D printer filament according to the present invention has high circularity in diameter, discharge unevenness during molding is prevented, and a molded body excellent in appearance and surface properties can be stably produced.

When making a molded body while laminating the strand-form resin discharged from the extrusion head by the 3D printer, a step of stopping the discharge of the resin and then moving the nozzle to a laminated position in the next step is included. At this time, the resin may not be interrupted and a fine resin fiber is generated and remains on the surface of the molded body like cobwebbing. When such cobwebbing occurs, problems such as deterioration in the appearance of the molded body may occur.

In addition to a small standard deviation in diameter and a high circularity, the 3D printer filament according to the present invention has a moderate crystallization rate and a high breaking strain, so that it is possible to stably produce a molded body in which cobwebbing is prevented and which is excellent in appearance and surface properties.

When making a molded body while laminating the strand-form resin discharged from the extrusion head by the 3D printer, the resin may adhere to the nozzle part of the extrusion head, and the adhered resin may be colored by heat to form black foreign matters (black dots or black stripes). Then, such foreign matters are mixed into the resin molded body, causing problems such as deterioration in appearance and easy breakage of the molded body.

Since the 3D printer filament according to the present invention is excellent in heat resistance and is less likely to be colored by heat even when the resin is adhered to the nozzle part, a molded body having an excellent appearance can be stably produced.

In the resin molded body according to the present invention, depending on the intended use, crystallization may be promoted or completed by a heat treatment after printing.

(Application of Resin Molded Body)

The resin molded body according to the present invention is excellent in surface appearance, heat resistance and durability. The application thereof is not particularly limited, and the resin molded body can be suitably used for applications, for example, stationery; toys; covers of cellular phones, smartphones, etc.; parts such as grip; school educational materials; repair parts for domestic electrical appliances or OA equipment; various parts for automobiles, motorcycles, bicycles, etc.; electric/electronic devices; materials for agriculture; materials for gardening; materials for fisheries; materials for civil engineering/construction; and medical supplies.

Examples

Hereinafter, the present invention will be described in more detail with reference to Examples, but the present invention is not limited thereto. Various measurement values and evaluations displayed in this description were performed as follows.

(1) Heat quantitiy of crystallization (ΔHc)

The heat quantitiy of crystallization (ΔHc) (cooling process) was obtained from a thermogram obtained by measurement using a differential scanning calorimeter (product name "Pyris**1** DSC") manufactured by PerkinElmer Co., Ltd. according to JIS K7122 when about 10 mg of a sample was heated from room temperature to a crystal melting temperature (melting point Tm) + 20°C at a heating rate of 10°C/min, held at the temperature for 1 minute, and then cooled to 30°C at a cooling rate of 10°C/min. Each value was rounded off to the first decimal place. When the sample was in a filament form, the filament was cut perpendicularly to the long axis (length direction) to obtain an amount of sample required for measurement.

(2) Crystal melting temperature (melting point Tm), crystallization temperature (Tc (cooling process)), and glass transition temperature (Tg (reheating process)).

The crystallization temperature (Tc, °C) (cooling process), the crystal melting temperature (melting point Tm, °C) (reheating process), and the glass transition temperature (Tg, °C) (reheating process) were obtained from respective thermograms obtained by measurement using a differential scanning calorimeter (product name "Pyris1 DSC") manufactured by PerkinElmer Co., Ltd. according to JIS K7121 when about 10 mg of a sample was heated from room temperature to a crystal melting temperature (melting point Tm) + 20°C at a heating rate of 10°C/min, held at the temperature for 1 minute, then cooled to 30°C at a cooling rate of 10°C/min, and again heated to 280°C at a heating rate of 10°C/min. Each value was rounded off to the first decimal place. When the sample was in a filament form, the filament was cut perpendicularly to the long axis (length direction) to obtain an amount of sample required for measurement.

(3) Evaluation on 3D printer filament

<Circularity of diameter>

The obtained filament was measured at 10 points at an interval of 3 cm to determine the major axis and the minor axis with a caliper, and the ratio of minor axis/major axis at each measurement point was determined. The average value of the ratios of the minor axis/major axis at the 10 measured points was defined as the circularity. The closer the ratio is to 1.0, the closer the filament cross section is to a perfect circle.

(4) Evaluation on resin molded body

<Warpage>

As an evaluation sample, a dumbbell-shaped sample having a sample length of 75 mm, a width of 10 mm, and a thickness of 5 mm was produced according to the production conditions described in Examples to be described later. The evaluation sample was produced from the filaments described in Examples and Comparative Examples to be described later using a 3D printer with the thickness direction of the sample being the Z-axis direction (laminating direction).
After producing the evaluation sample, the distance from the four corners of the sample and a horizontal plane when the sample was removed from the printing substrate and placed on the horizontal plane was measured, and the average value of the obtained values was taken as the amount of warpage.
The sample that could be produced and had an amount of warpage of less than 0.1 mm was evaluated as "AA", the sample that could be produced and had an amount of warpage of 0.1 mm or more and less than 2 mm was evaluated as "A", and the sample that could be produced but had a warpage of 2 mm or more, or the sample that had a large amount of warpage and was peeled off from the substrate during the production and could not be produced was evaluated as "B".

<Interlayer adhesiveness>

The interlayer adhesiveness was evaluated by measuring the tensile strength according to JIS K7161. As an evaluation sample, a dumbbell-shaped sample having a sample length of 75 mm, a width of 10 mm, and a thickness of 5 mm was produced according to the production conditions described in Examples to be described later. The evaluation sample was produced from the filaments described in Examples and Comparative Examples to be described later using a 3D printer with the length direction of the sample being the Z-axis direction (laminating direction).
The case where the tensile strength under an initial distance between chucks of 45 mm, a speed of 50 mm/min, and 23°C was 10 MPa or more was evaluated as "AA", the case where the tensile strength was 1 MPa or more and less than 10 MPa was evaluated as "A", and the case where the tensile strength was less than 1 MPa or the testable dumbbell-shaped sample was not obtained was evaluated as "B".

<Heat resistance>

As an evaluation sample, a cup-like resin molded body (3D modeled product) having an opening at the upper part shown in Fig. 2 was produced according to the production conditions described in Examples to be described later. The evaluation sample was produced from the filaments described in Examples and Comparative Examples to be described later using a 3D printer with the height direction of the cup-like resin molded body being the Z-axis direction (laminating direction).
In order to promote crystallization, the produced resin molded body was subjected to a heat treatment for 12 hours at the highest glass transition temperature (Tg (reheating process)) + 30°C among the glass transition temperatures of the resin used for the filament. Thereafter, the resin molded body was allowed to stand with the opening thereof facing upward, a load of 0.01 MPa was applied from the top for 1 minute at a temperature of crystal melting temperature (melting point Tm) - 30°C, and the height after load application was measured. Then, the case where the height after load application was 95% or more of the height before load application (40 mm) was evaluated as "AA", the case where the height after load application was 70% or more and less than 95% of the height before load application was evaluated as "A", and the case where the height after load application was less than 70% of the height before load application was evaluated as "B".

<Comprehensive evaluation>

The comprehensive evaluation on the resin molded body was performed according to the following criteria.

A: the evaluations on warpage, interlayer adhesiveness and heat resistance were all "A" or "AA".
B: any one or more of the evaluations on warpage, interlayer adhesiveness and heat resistance were "B".

The raw materials used in Examples and Comparative Examples are described below.

<Crystalline polyamide-based resin (A)>

Crystalline polyamide-based resin (A-1): polyamide 6 (manufactured by Toray Industries Inc., product name: AMILAN CM1021FS, density: 1.13 g/cm$^3$, Tg (reheating process): 50°C, Tm: 222.2°C, Tc (cooling process): 186.6°C, $\Delta$Hc: 66.1 J/g, relative viscosity: 3.4)

<Component (B) that delays crystallization of crystalline polyamide-based resin (A)>

Component (B-1): amorphous polyamide-based resin (manufactured by Mitsubishi Gas Chemical Company, Inc., product name: MX Nylon #7501, density: 1.21 g/cm$^3$, Tg (reheating process): 121.6°C, amorphous ($\Delta$Hc: 0 J/g), diamine component: 100 mol% of metaxylylenediamine, dicarboxylic acid component: 50 mol% of adipic acid and 50 mol% of isophthalic acid)

<Production of Resin Composition>

The crystalline polyamide-based resin (A-1) and the component (B-1) were previously dried at 90°C for 24 hours to make the water content of each raw material 0.1 mass% or less, and resin compositions having the following formulations were produced using a same-direction twin-screw kneader (having a diameter of 26 mm) (manufactured by LabTech Engineering, product name: LTS26-40, LID = 40 mm). In addition, the kneading conditions included a cylinder setting temperature of 250°C, a rotation speed of 150 rpm, and a discharge rate of 15 kg/h.

For a resin composition (C-1), 65 parts by mass of the crystalline polyamide-based resin (A-1) and 35 parts by mass of the component (B-1) that delays crystallization of the crystalline polyamide-based resin (A) were blended.

For a resin composition (C-2), 35 parts by mass of the crystalline polyamide-based resin (A-1) and 65 parts by mass of the component (B-1) that delays crystallization of the crystalline polyamide-based resin (A) were blended.

For a resin composition (C-3), 80 parts by mass of the crystalline polyamide-based resin (A-1) and 20 parts by mass of the component (B-1) that delays crystallization of the crystalline polyamide-based resin (A) were blended.

For a resin composition (C-4), 90 parts by mass of the crystalline polyamide-based resin (A-1) and 10 parts by mass of the component (B-1) that delays crystallization of the crystalline polyamide-based resin (A) were blended.

For a resin composition (C-5), 40 parts by mass of the crystalline polyamide-based resin (A-1) and 60 parts by mass of the component (B-1) that delays crystallization of the crystalline polyamide-based resin (A) were blended.

For a resin composition (C-6), 20 parts by mass of the crystalline polyamide-based resin (A-1) and 80 parts by mass of the component (B-1) that delays crystallization of the crystalline polyamide-based resin (A) were blended.

(Example 1)

<Production of filament>

The resin composition (C-1) was used as the raw material for forming the outer layer, and the resin composition (C-4) was used as the raw material for forming the inner layer. The filament was produced to have a two-layer structure (core-sheath structure) in which the resin composition (C-4) was completely covered by the resin composition (C-1), and to have a ratio of the diameter of the inner layer (the core part in the core-sheath structure) to the filament diameter of 80%. The production conditions were such that the resin composition was laminated and extruded from a die diameter of 3 mm at a set temperature of 250°C, and was passed through a 40°C water tank by a drawing-out device at 5 m/min. The cross-sectional diameter of the obtained filaments ranged from 1.65 mm to 1.90 mm. Various evaluations were performed on the resin compositions used and the obtained filaments. The results are shown in Table 1.

<Production of resin molded body>

The produced filament was dried previously at 90°C for 24 hours such that the water content was 0.1 mass% or less. Various evaluation samples were produced as a 3D object by using Pharaoh XD20 (product name) manufactured by Mass Portal SIA as a material extrusion type (ME type) 3D printer.

The production conditions included a printing speed of 60 mm/s, an internal filling rate of 100%, a printing atmosphere temperature of 40°C, a substrate temperature of 60°C, and a discharge temperature of 250°C. The molten resin was discharged from the extrusion head in the form of strands having a diameter of 0.4 mm.

Warpage, interlayer adhesiveness and heat resistance of the obtained resin molded body were evaluated. The results are shown in Table 1.

(Example 2)

A filament and a resin molded body were produced in the same manner as in Example 1 except that the resin composition (C-2) was used as the raw material for forming the outer layer in the production of the filament. Then, the resin composition used, the filament, and the resin molded body were evaluated in the same manner as in Example 1. The evaluation results are shown in Table 1.

(Example 3)

A filament and a resin molded body were produced in the same manner as in Example 1 except that the resin composition (C-3) was used as the raw material for forming the outer layer and the resin composition (C-1) was used as the raw material for forming the inner layer in the production of the filament. Then, the resin composition used, the filament, and the resin molded body were evaluated in the same manner as in Example 1. The evaluation results are shown in Table 1.

(Example 4)

A filament and a resin molded body were produced in the same manner as in Example 1 except that the resin composition (C-4) was used as the raw material for forming the outer layer and the resin composition (C-1) was used as the raw material for forming the inner layer in the production of the filament. Then, the resin composition used, the filament, and the resin molded body were evaluated in the same manner as in Example 1. The evaluation results are shown in Table 1.

(Example 5)

A filament and a resin molded body were produced in the same manner as in Example 1 except that the resin composition (C-5) was used as the raw material for forming the outer layer and the resin composition (C-4) was used as the raw material for forming the inner layer in the production of the filament. Then, the resin composition used, the filament, and the resin molded body were evaluated in the same manner as in Example 1. The evaluation results are shown in Table 1.

(Example 6)

A filament and a resin molded body were produced in the same manner as in Example 1 except that the resin composition (C-6) was used as the raw material for forming the outer layer and the resin composition (C-4) was used as the raw material for forming the inner layer in the production of the filament. Then, the resin composition used, the filament, and the resin molded body were evaluated in the same manner as in Example 1. The evaluation results are shown in Table 1.

(Comparative Example 1)

A filament and a resin molded body were produced in the same manner as in Example 1 except that the crystalline polyamide-based resin (A-1) alone was used as the raw material for forming the outer layer and the resin composition (C-1) was used as the raw material for forming the inner layer in the production of the filament. Then, the resin composition used, the filament, and the resin molded body were evaluated in the same manner as in Example 1.

The evaluation results are shown in Table 1.

(Comparative Example 2)

A filament and a resin molded body were produced in the same manner as in Example 1 except that the resin composition (C-3) was used as the raw material for forming the outer layer and the crystalline polyamide-based resin (A-1) alone was used as the raw material for forming the inner layer in the production of the filament. Then, the resin composition used, the filament, and the resin molded body were evaluated in the same manner as in Example 1.
In Comparative Example 2, since a large warpage occurred during the production of the resin molded body and the printing could be completed only about 10% of the whole, the evaluations on interlayer adhesiveness and heat resistance were performed using this modeled resin molded body. The evaluation results are shown in Table 1.

(Comparative Example 3)

A filament and a resin molded body were produced in the same manner as in Example 1 except that the resin composition (C-3) was used as the raw material for forming the outer layer and alone the component (B-1) that delays crystallization of the crystalline polyamide-based resin (A) was used as the raw material for forming the inner layer in the production of the filament. Then, the resin composition used, the filament, and the resin molded body were evaluated in the same manner as in Example 1. The evaluation results are shown in Table 1.

(Reference Example)

A filament and a resin molded body were produced in the same manner as in Example 1 except that a single-layer filament was produced using the resin composition (C-2) as the raw material in the production of the filament. Then, the resin composition used, the filament, and the resin molded body were evaluated in the same manner as in Example 1. The evaluation results are shown in Table 1.
The cross-sectional diameter of the obtained filaments ranged from 1.65 mm to 1.90 mm.

[Table 1]

| (Part by mass) | | | Example | | | | | | Comparative Example | | | Reference Example |
|---|---|---|---|---|---|---|---|---|---|---|---|---|---|
| | | | 1 | 2 | 3 | 4 | 5 | 6 | 1 | 2 | 3 | |
| Outer layer | Crystalline polyamide-based resin (A) | A-1 | 65 | 35 | 80 | 90 | 40 | 20 | 100 | 80 | 80 | 35 |
| | Component (B) | B-1 | 35 | 65 | 20 | 10 | 60 | 80 | - | 20 | 20 | 65 |
| | △Hc (J/g) | | 37.6 | 4.5 | 52.3 | 57.7 | 24.7 | 0 | 66.1 | 52.3 | 52.3 | 4.5 |
| | Tm - Tc (cooling process ) (°C) | | 47.7 | 55.6 | 38.8 | 38.1 | 54.8 | - | 35.6 | 38.8 | 38.8 | 55.6 |
| | Tc (cooling process) (°C) | | 174.2 | 163.1 | 183.8 | 185.0 | 164.0 | - | 187.8 | 183.8 | 183.8 | 163.1 |
| | Tm (°C) | | 221.9 | 218.7 | 222.6 | 223.1 | 218.8 | - | 223.4 | 222.6 | 222.6 | 218.7 |
| | Tm (°C) Tg (reheating process) (°C) | | 80.0 | 96.3 | 66.0 | 58.6 | 90.1 | 108.0 | 50.6 | 66.0 | 66.0 | 96.3 |
| Inner layer | Crystalline polyamide-based resin (A) | A-1 | 90 | 90 | 65 | 65 | 90 | 90 | 65 | 100 | - | - |
| | Component (B) | B-1 | 10 | 10 | 35 | 35 | 10 | 10 | 35 | - | 100 | - |
| | △Hc (J/g) | | 57.7 | 57.7 | 37.6 | 37.6 | 57.7 | 57.7 | 37.6 | 66.1 | 0 | - |
| | Tm - Tc (cooling process ) (°C) | | 37.9 | 37.9 | 47.7 | 47.7 | 37.9 | 37.9 | 47.7 | 35.6 | - | - |
| | Tc (cooling process) (°C) | | 185.2 | 185.2 | 174.2 | 174.2 | 185.2 | 185.2 | 174.2 | 187.8 | - | - |
| | Tm (°C) | | 223.1 | 223.1 | 221.9 | 221.9 | 223.1 | 223.1 | 221.9 | 223.4 | - | - |
| | Tg (reheating process) (°C) | | 58.6 | 58.6 | 80.0 | 80.0 | 58.6 | 58.6 | 80.0 | 50.0 | 122.0 | - |
| Evaluation on 3D printer filament | △Hc (J/g) | | 50.5 | 38.5 | 42.9 | 50.5 | 46.1 | 37.1 | 47.9 | 61.1 | 18.8 | 4.5 |
| | Tc (cooling process) (°C) | | 185°C/ 174°C | 185°C/ 161°C | 184°C/ 174°C | 185°C/ 174°C | 185°C/ 164°C | 185°C | 188°C/ 174°C | 188°C/ 183°C | 184°C | 161°C |
| | Circularity | | 0.97 | 0.97 | 0.97 | 0.97 | 0.97 | 0.97 | 0.97 | 0.97 | 0.97 | 0.97 |

EP 3 812 130 B1

19

| (Part by mass) | | Example | | | | | | Comparative Example | | | Reference Example |
|---|---|---|---|---|---|---|---|---|---|---|---|
| | | 1 | 2 | 3 | 4 | 5 | 6 | 1 | 2 | 3 | |
| Evaluation on resin molded body | Warpage (mm) | AA (< 0.1) | A (1.4) | AA (< 0.1) | A (1.6) | A (0.7) | A (1.4) | A (1.6) | B (cannot be modeled) | AA (< 0.1) | A (1.3) |
| | Interlayer adhesiveness (MPa) | AA (16) | AA (24) | A (8) | A (4) | AA (20) | AA (20) | B (< 0.1) | A (5) | AA (10) | AA (30) |
| | Heat resistance | AA (100) | AA (100) | AA (100) | AA (100) | AA (100) | A (80) | AA (100) | AA (100) | B (20) | B (20) |
| Comprehensive evaluation | | A | A | A | A | A | A | B | B | B | B |

As can be confirmed from Table 1, the 3D printer filament having a stricture with the specific thermal properties defined in the present invention is excellent in all evaluations on the all resin molded bodies (Examples 1 to 6). In contrast, it can be confirmed that those that do not satisfy the elements specified in the present invention are poor in one or more of warpage, interlayer adhesiveness, and heat resistance in the evaluation on the resin molded body (Comparative Examples 1 to 3).

Specifically, when the resin composition forming the outer layer does not contain the component (B) that delays crystallization of the crystalline polyamide-based resin (A), the interlayer adhesiveness of the resin molded body is poor (Comparative Example 1). In addition, when the heat quantitiy of crystallization ($\Delta$Hc) of the 3D printer filament is higher than the range specified by the present invention, a large warpage occurs during printing, resulting in poor printability (Comparative Example 2). On the other hand, when the heat quantitiy of crystallization ($\Delta$Hc) of the 3D printer filament is lower than the range specified by the present invention, the heat resistance is poor (Comparative Example 3).

As can be seen from the comparison between Reference Example and Example 2, a 3D printer filament excellent in warpage, interlayer adhesiveness, and heat resistance of the resin molded body is obtained by forming a multi-layer structure instead of a single layer and having a plurality (two in this case) of crystallization temperatures (Tc (cooling process)).

In the outer layer of Example 6 and the inner layer of Comparative Example 3, since the heat quantitiy of crystallization ($\Delta$Hc) was 0 J/g, the crystal melting temperature (melting point Tm) and the crystallization temperature (Tc (cooling process)) could not be observed.

The present application is based on a Japanese Patent Application (Japanese Patent Application No. 2018-108487) filed on June 6, 2018.

REFERENCE SIGNS LIST

    1 outer layer
    2 inner layer

**Claims**

1. A 3D printer material comprising:

   an outer layer; and
   an inner layer, wherein
   a heat quantity of crystallization of the 3D printer material in differential scanning calorimetry is from 20 to 60 J/g as measured according to the method disclosed in the present specification, and
   the outer layer contains a resin composition (C) containing a crystalline polyamide-based resin (A) and a component (B) that delays crystallization of the crystalline polyamide-based resin (A).

2. The 3D printer material according to claim 1, wherein the component (B) is an amorphous polyamide-based resin.

3. The 3D printer material according to claim 1 or 2, wherein a crystallization temperature (Tc (cooling process)) of the outer layer is lower than a crystallization temperature (Tc (cooling process)) of the inner layer.

4. The 3D printer material according to any one of claims 1 to 3, wherein the heat quantity of crystallization of the outer layer in the differential scanning calorimetry is from 15 to 50 J/g as measured according to the method disclosed in the present specification.

5. The 3D printer material according to any one of claims 1 to 4, wherein the crystalline polyamide-based resin (A) contains one or more selected from polyamide 6, polyamide 66, polyamide MXD6, polyamide 9T, polyamide 10T, and a copolyamide thereof.

6. The 3D printer material according to any one of claims 2 to 5, wherein a glass transition temperature (Tg (reheating process)) of the amorphous polyamide-based resin is higher than a glass transition temperature (Tg (reheating process)) of the crystalline polyamide-based resin (A) by 30°C or more.

7. The 3D printer material according to any one of claims 1 to 6, wherein the inner layer contains a polyamide-based resin.

**8.** A 3D printer filament comprising the 3D printer material according to any one of claims 1 to 7.

**9.** A resin molded body modeled by a 3D printer using the 3D printer filament according to claim 8.

**10.** A roll of the 3D printer filament according to claim 8.

**11.** A cartridge for mounting in a 3D printer, whereby the roll according to claim 10 is housed in the cartridge.


**Patentansprüche**

**1.** Ein Material für einen 3D-Drucker, umfassend:

eine äußere Schicht; und
eine innere Schicht, wobei
eine Kristallisations-Wärmemenge des Materials für einen 3D-Drucker bei einer Differentialscanningkalorimetrie 20 bis 60 J/g beträgt, wie gemäß dem in der vorliegenden Beschreibung offenbarten Verfahren gemessen, und die äußere Schicht eine Harzzusammensetzung (C) enthaltend ein kristallines Harz auf Polyamidbasis (A) und eine Komponente (B), welche die Kristallisation des kristallinen Harzes auf Polyamidbasis (A) verzögert, enthält.

**2.** Das Material für einen 3D-Drucker gemäß Anspruch 1, wobei die Komponente (B) ein amorphes Harz auf Polyamidbasis ist.

**3.** Das Material für einen 3D-Drucker gemäß Anspruch 1 oder 2, wobei eine Kristallisationstemperatur (Tc (Kühlverfahren)) der äußeren Schicht niedriger ist als eine Kristallisationstemperatur (Tc (Kühlverfahren)) der inneren Schicht.

**4.** Das Material für einen 3D-Drucker gemäß einem der Ansprüche 1 bis 3, wobei die Kristallisations-Wärmemenge der äußeren Schicht bei der Differentialscanningkalorimetrie 15 bis 50 J/g beträgt, wie gemäß dem in der vorliegenden Beschreibung offenbarten Verfahren gemessen.

**5.** Das Material für einen 3D-Drucker gemäß einem der Ansprüche 1 bis 4, wobei das kristalline Harz auf Polyamidbasis (A) eines oder mehrere, ausgewählt aus Polyamid 6, Polyamid 66, Polyamid MXD6, Polyamid 9T, Polyamid 10T und ein Copolyamid davon, enthält.

**6.** Das Material für einen 3D-Drucker gemäß einem der Ansprüche 2 bis 5, wobei eine Glasübergangstemperatur (Tg (Wiedererwärmverfahren)) des amorphen Harzes auf Polyamidbasis um 30°C oder mehr höher ist als eine Glasübergangstemperatur (Tg (Wiedererwärmverfahren)) des kristallinen Harzes auf Polyamidbasis (A).

**7.** Das Material für einen 3D-Drucker gemäß einem der Ansprüche 1 bis 6, wobei die innere Schicht ein Harz auf Polyamidbasis enthält.

**8.** Ein Filament für einen 3D-Drucker, umfassend das Material für einen 3D-Drucker gemäß einem der Ansprüche 1 bis 7.

**9.** Ein Harzformkörper, welcher durch einen 3D-Drucker unter Verwendung des Filaments für den 3D-Drucker gemäß Anspruch 8 modelliert wurde.

**10.** Eine Rolle des Filaments für den 3D-Drucker gemäß Anspruch 8.

**11.** Eine Kartusche zur Montage in einen 3D-Drucker, wobei die Rolle gemäß Anspruch 10 in der Kartusche untergebracht ist.


**Revendications**

**1.** Matériau d'imprimante 3D comprenant :

une couche externe ; et

une couche interne, dans lequel

une quantité de chaleur de cristallisation du matériau d'imprimante 3D dans une calorimétrie différentielle est de 20 à 60 J/g comme mesurée selon la méthode décrite dans la présente spécification, et

la couche externe contient une composition de résine (C) contenant une résine à base de polyamide cristalline (A) et un constituant (B) qui retarde la cristallisation de la résine à base de polyamide cristalline (A).

2. Matériau d'imprimante 3D selon la revendication 1, dans lequel le constituant (B) est une résine à base de polyamide amorphe.

3. Matériau d'imprimante 3D selon la revendication 1 ou 2, dans lequel une température de cristallisation (Tc (procédé de refroidissement)) de la couche externe est inférieure à une température de cristallisation (Tc (procédé de refroidissement)) de la couche interne.

4. Matériau d'imprimante 3D selon l'une quelconque des revendications 1 à 3, dans lequel la quantité de chaleur de cristallisation de la couche externe dans la calorimétrie différentielle est de 15 à 50 J/g comme mesurée selon la méthode décrite dans la présente spécification.

5. Matériau d'imprimante 3D selon l'une quelconque des revendications 1 à 4, dans lequel la résine à base de polyamide cristalline (A) contient un ou plusieurs choisis parmi le polyamide 6, polyamide 66, polyamide MXD6, polyamide 9T, polyamide 10T, et un copolyamide de ceux-ci.

6. Matériau d'imprimante 3D selon l'une quelconque des revendications 2 à 5, dans lequel une température de transition vitreuse (Tg (procédé de réchauffage)) de la résine à base de polyamide amorphe est supérieure à une température de transition vitreuse (Tg (procédé de réchauffage)) de la résine à base de polyamide cristalline (A) de 30°C ou plus.

7. Matériau d'imprimante 3D selon l'une quelconque des revendications 1 à 6, dans lequel la couche interne contient une résine à base de polyamide.

8. Filament d'imprimante 3D comprenant le matériau d'imprimante 3D selon l'une quelconque des revendications 1 à 7.

9. Corps moulé en résine modelé par une imprimante 3D utilisant le filament d'imprimante 3D selon la revendication 8.

10. Rouleau du filament d'imprimante 3D selon la revendication 8.

11. Cartouche pour montage dans une imprimante 3D, dans laquelle le rouleau selon la revendication 10 est logé dans la cartouche.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003502184 T
- JP 2003534159 T
- JP 2010521339 T
- JP 2008194968 A
- WO 2015037574 A
- JP 2016193602 A
- US 2012070619 A
- JP 2016505409 A
- JP 2017502852 A
- JP 2018108487 A